# EUROPÄISCHE PATENTSCHRIFT

(11) **EP 0 996 888 B1**
(45) Veröffentlichungstag und Bekanntmachung des Hinweises auf die Patenterteilung: **13.03.2002**
(21) Anmeldenummer: 98942496.5
(22) Anmeldetag: 06.07.1998
(51) Int. Cl.: G06F 11/00

(54) **VERFAHREN UND DATENVERARBEITUNGSANLAGE ZUM TESTEN EINES ASSEMBLERPROGRAMMS AUF PORTABILITÄT**
METHOD AND DATA PROCESSING SYSTEM FOR TESTING AN ASSEMBLER PROGRAM FOR TRANSFERABILITY
PROCEDE ET INSTALLATION DE TRAITEMENT DE DONNEES POUR TESTER LA PORTABILITE D'UN PROGRAMME ASSEMBLEUR

(30) Priorität: 23.07.1997 DE 19731733
(43) Veröffentlichungstag der Anmeldung: 03.05.2000
(73) Patentinhaber: Fujitsu Siemens Computers GmbH, 81739 München (DE)
(72) Erfinder: WEBER, Christian, D-85586 Poing (DE)
(74) Vertreter: Epping, Wilhelm, Dipl.-Ing.
(86) Internationale Anmeldenummer: DE9801867
(87) Internationale Veröffentlichungsnummer: WO9905595

(56) Entgegenhaltungen:
- EP-A- 0 430 182

## Beschreibung

Die Erfindung betrifft ein Verfahren zum Testen eines Assemblerprogramms auf Übertragbarkeit, auch Portabilität genannt, bei dem das Assemblerprogramm für einen ersten Prozessortyp Assemblerbefehle enthält. Für das Assemblerprogramm sind Regeln vorgegeben, die ein Übertragen des Assemblerprogramms in eine Folge von Prozessorbefehlen für einen zweiten Prozessortyp ermöglichen. Beim Test wird überprüft, ob das Assembler-programm diesen Regeln entspricht.

Im folgenden wird ein Rechner, in dem sich ein Prozessor des ersten Prozessortyps befindet, als Ursprungsrechner bezeichnet. In der Regel wurde das Assemblerprogramm für den Ursprungsrechner entwickelt und auf diesem für den bestimmungsgemäßen Gebrauch getestet. Ein Rechner mit einem Prozessor des zweiten Prozessortyps wird im folgenden als Zielrechner bezeichnet. Das Assemblerprogramm soll nach einer Übersetzung in Befehle für den zweiten Prozessortyp auch auf dem Zielrechner ausgeführt werden. Somit findet eine Übertragung vom Ursprungsrechner auf einen Zielrechner statt.

Ein bekanntes Verfahren zum Testen eines Assemblerprogramms auf Übertragbarkeit für zwei spezielle Prozessortypen ist im folgenden Aufsatz erläutert: N. Kronenberg, T. R. Benson, W. M. Cardora, R. Jagannathan, B. J. Thomas: Porting Open VMS from VAX to Alpha AXP, Communications of ACM, Band 36, Nr. 2, Februar 1993. Beim bekannten Verfahren können bestimmte Verstöße gegen Regeln zur Gewährleistung der Übertragbarkeit mit einer automatischen Syntaxanalyse erkannt werden. Es bleiben jedoch Regelverstöße übrig, die auf diese Weise nicht erkannt werden. Solche Fehler werden erst dann erkannt, wenn das Assemblerprogramm bereits übertragen worden ist. Wird die beim Übertragen erzeugte Folge von Prozessorbefehlen für den zweiten Prozessortyp dann mit einem Prozessor des zweiten Prozessortyps ausgeführt, so kommt es zu Fehlersituationen und damit zu einer Unterbrechung im Programmablauf. In einem solchen Fall muß das Assemblerprogramm auf dem Ursprungsrechner so korrigiert werden, daß es an der Stelle, welche die Unterbrechung verursacht hat, nicht mehr gegen die Regeln verstößt. Anschließend erfolgt ein erneutes Übertragen und ein erneuter Test des bestimmungsgemäßen Gebrauchs mit dem zweiten Prozessortyp. Beim erneuten Test kann dann durchaus an einer anderen Stelle der Programmbearbeitung eine Unterbrechung auftreten. Somit entsteht ein Kreislauf, der im ungünstigsten Fall sehr oft durchlaufen werden muß.

Außerdem gibt es Situationen, in denen der zweite Prozessortyp nicht unmittelbar verfügbar ist, z.B. weil er gerade erst entwickelt wird. Mit der Korrektur des Assemblerprogramms bezüglich der Übertragbarkeit kann beim bekannten Verfahren erst begonnen werden, wenn der zweite Prozessortyp verfügbar ist. Der entstehende Zeitverzug kann mehrere Monate betragen.

Drei wichtige Regeln, die im Assemblerprogramm eingehalten werden müssen, um die Übertragbarkeit zu ermöglichen, sind:
- Prozessorbefehle der Befehlsfolge dürfen während des Ausführens nicht verändert werden,
- Prozessorbefehle dürfen auch nicht beim Ausführen der Befehlsfolge gelesen und weiter verarbeitet werden, und
- es dürfen keine Annahmen über Anzahl der Bytes je Prozessorbefehl getroffen werden, d.h. es darf z.B. nicht mit dieser Anzahl gerechnet werden.

Es ist Aufgabe der Erfindung, zum Testen eines Assemblerprogramms auf Übertragbarkeit vom Ursprungsrechner auf den Zielrechner ein einfaches Verfahren anzugeben, mit dem bereits auf dem Ursprungsrechner die Übertragbarkeit beeinträchtigende Fehler erkannt werden, die z.B. durch eine einfache Syntaxanalyse nicht erkennbar sind.

Diese Aufgabe wird durch ein Verfahren mit den Merkmalen des Patentanspruchs 1 gelöst. Vorteilhafte Weiterbildungen sind in den Unteransprüchen angegeben.

Die Erfindung geht von der Überlegung aus, daß ein Teil der Regelverstöße bereits auf dem Ursprungsrechner erfaßt werden kann, wenn die Befehlsfolge für den ersten Prozessortyp verfälscht wird, indem die Abstände der Speicheradressen von Speicherzellen, in denen die Prozessorbefehle gespeichert sind, verändert werden. Eine Streichung von Prozessorbefehlen würde die Ausführbarkeit der Befehlsfolge generell gefährden. Deshalb werden beim Verfahren nach der Erfindung zusätzliche Befehle in die Befehlsfolge eingefügt, um ausreichend viele Abstände der Speicheradressen von Speicherzellen mit Prozessorbefehlen zu vergrößern. Beim Verfahren nach der Erfindung entsteht eine verfälschte Befehlsfolge, die im Vergleich zu einer beim bestimmungsgemäßen Gebrauch des Assemblerprogramms verwendeten unverfälschten Befehlsfolge für den ersten Prozessortyp an mindestens einer vorgegebenen Stelle mindestens einen zusätzlichen Prozessorbefehl enthält. Regelverstöße, die darauf beruhen, daß sich der Programmierer des-Assemblerprogramms gerade darauf verläßt, daß Prozessorbefehle oder Daten an bestimmten Speicheradressen relativ zum Programmanfang oder relativ zu bestimmten Prozessorbefehlen gespeichert sind, führen zu Fehlermeldungen beim Abarbeiten der verfälschten Befehlsfolge, weil der erwartete Prozessorbefehl oder das erwartete Datum durch das Verfälschen verschoben worden ist, so daß anstelle des erwarteten Speicherinhalts ein falscher Speicherinhalt bearbeitet wird.

Durch das Verfahren nach der Erfindung kann auf dem Ursprungsrechner bereits ohne Verwenden des zweiten Prozessortyps festgestellt werden, ob gegen bestimmte Regeln verstoßen worden ist, welche die Übertragbarkeit des Assemblerprogramms vom Ursprungsrechner zum Zielrechner gewährleisten sollen. Das Erzeugen einer verfälschten Befehlsfolge ist weniger aufwendig als das Übertragen des Assemblerprogramms auf den Zielrechner, so daß das Verfahren nach der Erfindung gerade in Anbetracht des oben erwähnten Kreislaufs zu kürzeren Entwicklungszeiten führt. Dies gilt um so mehr, wenn ein Prozessor vom zweiten Prozessortyp noch nicht verfügbar ist. Außerdem müssen Testprogramme zum Test einzelner Funktionen des Assemblerprogramms nicht auf den Zielrechner übertragen werden, und es können die zu portierenden Programme schrittweise, d.h. mit nur jeweils einem verfälschten Modul pro Testlauf getestet werden, so daß die Fehlerlokalisierung erleichtert ist.

In einer Weiterbildung des Verfahrens nach der Erfindung sind die zusätzlichen Prozessorbefehle sogenannte Leerbefehle, die keine Operation des Prozessors vom ersten Prozessortyp bewirken. Somit kommt es durch die Leerbefehle nur zu einer Verschiebung der Abstände der Prozessorbefehle in der Befehlsfolge, ohne den bestimmungsgemäßen Gebrauch des Assemblerprogramms zu beeinträchtigen. Die Laufzeit zum Ausführen des Programms verlängert sich nur unerheblich, z.B. um den Faktor 0,2. Somit können auch Programme, die eine sogenannte Echtzeit-Bearbeitung durchführen, auf Übertragbarkeit getestet werden.

Die zusätzlichen Befehle werden vorzugsweise unmittelbar hinter sogenannten Zieladressen eingegeben. Eine Zieladresse ist die Adresse, an welcher der Prozessor die Bearbeitung nach dem Ausführen eines Sprungbefehls fortsetzt. Durch diese Maßnahme können die zusätzlichen Befehle gezielt automatisch eingefügt werden, da ein Assemblierer zum automatischen Erzeugen der verfälschten Befehlsfolge die Speicheradressen ermitteln kann, die ein Sprungziel sind. Z.B. sind die Sprungziele mit Hilfe sogenannter Sprungmarken im Assemblerprogramm gekennzeichnet.

Das erfindungsgemäße Verfahren wird in einer Weiterbildung auch eingesetzt, wenn der erste Prozessor Sprungbefehle nur beschränkt, innerhalb mindestens eines vorgegebenen Speicheradreßbereiches ausführen kann. Dies ist z.B. bei IBM-Rechnern der Serie /370 bzw. der Serie /390 der Fall. Der Anfang des Speicheradreßbereiches ist durch ein prozessoreigenes Basisregister festgelegt, dessen Wert z.B. durch den Programmierer vorgegeben wird. Der vorgegebene Speicheradreßbereich wird englisch auch als "Slice" bezeichnet und hat z.B. eine Größe von 4 kB. Beim Einfügen zusätzlicher Befehle muß gewährleistet werden, daß zwischen dem im Basisregister angelegten Wert und dem Sprungziel niemals mehr Speicheradressen liegen, als in einem Speicheradreßbereich zulässig sind. Dies läßt sich realisieren, indem der zusätzliche Prozessorbefehl selbst ein Befehl zum Schreiben eines jeweils geeigneten, vorgegebenen Adreßwertes in das Basisregister ist. Mit anderen Worten wird das Basisregister als Arbeitsregister zur Adressierung von Sprungzielen und von innerhalb der Befehlsfolge gespeicherten Daten verwendet. Eine einfache Strategie besteht z.B. darin, anstelle der Leerbefehle mit jeder Einfügung eines zusätzlichen Befehls den aktuellen Wert des Befehlszählers, d.h. die Adresse des aktuell ausgeführten Befehls, in das Basisregister zu übernehmen. Das Schreiben des Basisregisters ist somit selbst ein zusätzlicher Befehl.

Der in das Basisregister geschriebene vorgegebene Adreßwert ist in einer Weiterbildung des Verfahrens nach der Erfindung ein Wert, den das Basisregister an der gleichen Stelle in der unverfälschten Befehlsfolge hat, d.h. ohne das Einfügen der zusätzlichen Befehle. Diese Maßnahme wird dann eingesetzt, wenn gemäß Assemblerprogramm offensichtlich der ursprüngliche Wert des Basisregisters weiterverarbeitet werden soll. Außerdem wird diese Maßnahme vorsorglich ergriffen, wenn ein Sprungbefehl mit Hilfe eines anderen Prozessorregisters ausgeführt werden soll, das nicht das Basisregister ist.

Das Verfahren nach der Erfindung wird in einer Weiterbildung in einem Assembliererprogramm verwendet, das wahlweise eine verfälschte Befehlsfolge für den ersten Prozessortyp oder eine unverfälschte Befehlsfolge für den zweiten Prozessortyp erzeugt. Die Auswahl erfolgt z.B. über einen Parameter beim Aufruf des Assembliererprogramms. Auf dem Ursprungsrechner ist durch diese Maßnahme nur ein Assembliererprogramm vorhanden, so daß die Anzahl der Entwicklungswerkzeuge sinkt.

Sowohl beim Einfügen von Leerbefehlen als auch beim Verwenden des Basisregisters bleiben die sogenannten Außenschnittstellen des Assemblerprogramms unverändert. Die Außenschnittstellen sind z.B. Registerbelegungen bei Sprungbefehlen, mit denen ein anderes Programmodul aufgerufen wird. Somit kann beim Verfahren nach der Erfindung jederzeit eine verfälschte Befehlsfölge für den ersten Prozessortyp mit einer unverfälschten Befehlsfolge für den ersten Prozessortyp zu einem gemeinsamen Programm verbunden werden. Diese Maßnahme erleichtert das Auffinden von Fehlern, die durch Regelverstöße gegen Übertragungsregeln entstehen, da diese Fehler nur in dem Teil des Assemblerprogramms liegen können, zu welchem die verfälschte Befehlsfolge gehört.

Die Erfindung betrifft außerdem eine Datenverarbeitungsanlage nach Anspruch 11, die insbesondere zum Testen eines Assemblerprogramms auf Übertragbarkeit eingesetzt wird. Die für das Testverfahren genannten technischen Wirkungen gelten auch für die Datenverarbeitungsanlage.

Gemäß einem zweiten Aspekt betrifft die Erfindung ein Verfahren zum Übersetzen eines Assemblerprogramms, das vorzugsweise in einem Assembliererprogramm verwendet wird. Das Verfahren zum Übersetzen eines Assemblerprogramms unterscheidet sich von einem bekannten Übersetzungsverfahren dadurch, daß zusätzliche Prozessorbefehle eingefügt werden. Durch diese Maßnahme kann das Verfahren z.B. zum Test der Übertragbarkeit von Assemblerprogrammen eingesetzt werden.

In einer Weiterbildung wird ein Assembliererprogramm verwendet, das wahlweise eine verfälschte Befehlsfolge für den ersten Prozessortyp oder eine unverfälschte Befehlsfolge für den ersten Prozessortyp erzeugt. Durch diese Maßnahme ist der zusätzliche Aufwand gegenüber einem Assembliererprogramm gering, das nur eine unverfälschte Befehlsfolge für den ersten Prozessortyp erzeugen kann, da nur ein einziges Assembliererprogramm erforderlich ist.

Im folgenden werden Ausführungsbeispiele der Erfindung an Hand der Zeichnungen erläutert. Darin zeigen:
- Figur 1: ein Flußdiagramm mit Verfahrensschritten in einem Assembliererprogramm mit Testunterstützung,
- Figur 2: ein Beispiel für das Einfügen zusätzlicher Leerbefehle zum "Verfälschen" einer Befehlsfolge,
- Figur 3: das Verfälschen einer Anweisung zum Festlegen einer Sprungmarke,
- Figur 4: das Verfälschen eines bedingten Sprungbefehls zu einer Sprungmarke,
- Figur 5: das Verfälschen eines bedingten Sprungbefehls, dessen Zieladresse in einem Register angegeben ist,
- Figur 6: das Verfälschen eines Ladebefehls zum Laden des Inhalts des Basisregisters, und
- Figur 7: das Verfälschen eines Ladebefehls zum Laden eines Datenwerts.

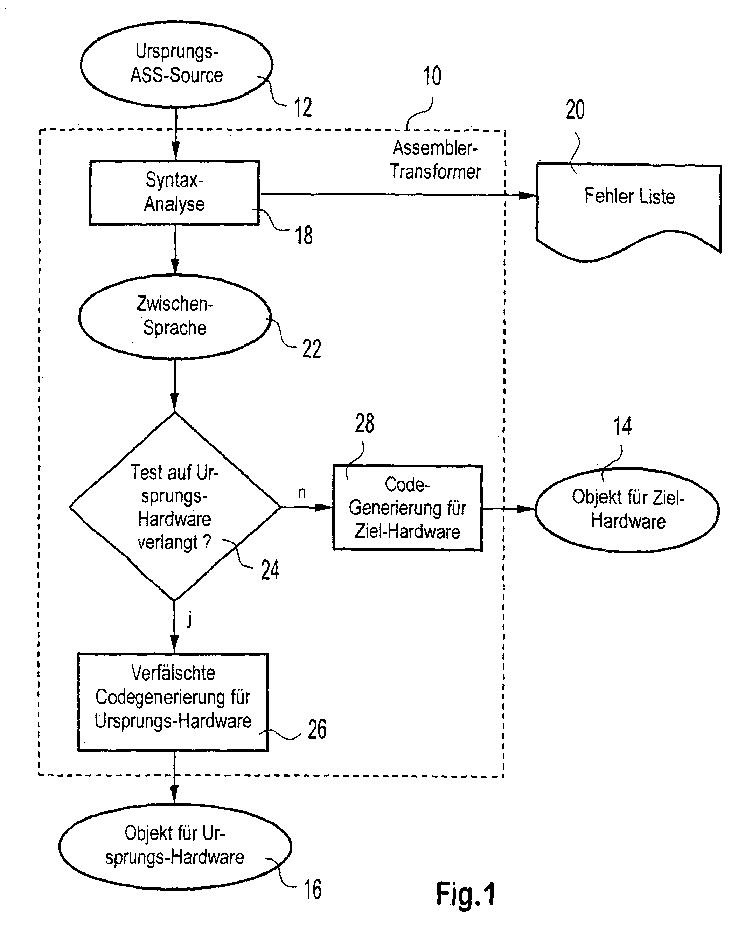

Figur 1 zeigt ein Flußdiagramm mit Verfahrensschritten, die in einem Assembliererprogramm 10 mit Testunterstützung ausgeführt werden. Das Assembliererprogramm 10 übersetzt ein in Assemblersprache geschriebenes Quellprogramm 12 wahlweise in ein Objektprogramm 14 für einen sogenannten RISC-Prozessor (reduced instruction set computer) oder in ein Objektprogramm 14 für einen 390er-Prozessor, d.h. für einen Prozessor in einem zur der IBM-Serie /390 kompatiblen Rechner.

Das Quellprogramm 12 wurde auf einem zur IBM-Serie /390 kompatiblen Rechner entwickelt und auf seinen bestimmungsgemäßen Gebrauch hin getestet. Der zur IBM-Serie /390 kompatible Rechner ist somit der Ursprungsrechner. Das Quellprogramm 12 enthält Assemblerbefehle, wie z.B. "BR" für eine unbedingte Verzweigung, d.h. für einen Sprungbefehl. Außerdem enthält das Quellprogramm 12 noch Anweisungen an das Assemblierer-programm 10, wie z.B. "LAB1 EQU *" zum Festlegen einer Sprungmarke LAB1 an der aktuellen Position.

Das Objektprogramm 14 enthält eine Befehlsfolge aus Prozessorbefehlen für den RISC-Prozessor. Jeder Prozessorbefehl enthält seinerseits eine Folge aus Nullen und Einsen, welche den Code für den Prozessorbefehl darstellen.

Das Objektprogramm 16 enthält dagegen, wie bereits erwähnt, eine Befehlsfolge für den in der /390er Serie eingesetzten 390er-Prozessor. Die einzelnen Prozessorbefehle für den 390er-Prozessor enthalten wiederum Folgen aus Nullen und Einsen. Die Codierung der Prozessorbefehle im Objektprogramm 16 ist jedoch anders als die Codierung der Prozessorbefehle im Objektprogramm 14. Ursache dafür ist, daß der RISC-Prozessor aufgrund seines anderen Aufbaus im Vergleich zum 390er-Prozessor nur einfachere Befehlstypen bearbeiten kann. Die Befehle des RISC-Prozessors sind anders codiert als die Befehle für den 390er-Prozessor. Gelingt es, das Objektprogramm 14 mit einem RISC-Prozessor fehlerfrei auszuführen, so spricht man davon, daß das Quellprogramm 12 auf den sogenannten Zielrechner mit dem RISC-Prozessor übertragen bzw. portiert worden ist.

Eine Voraussetzung für das Übertragen des Quellprogramms 12 ist, daß nur Assemblerbefehle verwendet werden, die in Prozessorbefehle für den RISC-Prozessor übersetzt werden können. Vor dem Übertragen wird beim Ausführen des Assembliererprogramms 10 in einem Schritt 18 mittels einer Syntaxanalyse geprüft, ob nur diese Assemblerbefehle im Quellprogramm 12 verwendet worden sind. Assemblerbefehle, die nicht in Befehle für den RISC-Prozessor übersetzt werden können, werden in eine Fehlerliste 20 eingetragen und somit gemeldet. Nach dem Ausführen des Assembliererprogramms 10 muß zu jeder Fehlermeldung in der Fehlerliste 20 der zugehörige Assemblerbefehl im Quellprogramm 12 korrigiert werden, bis beim Ausführen des Assembliererprogramms 10 im Schritt 18 kein Fehler mehr gemeldet wird.

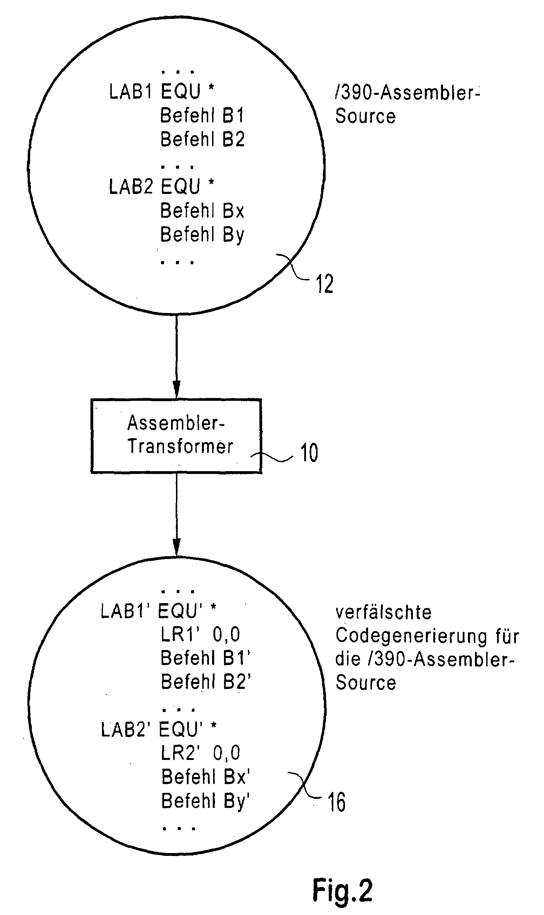

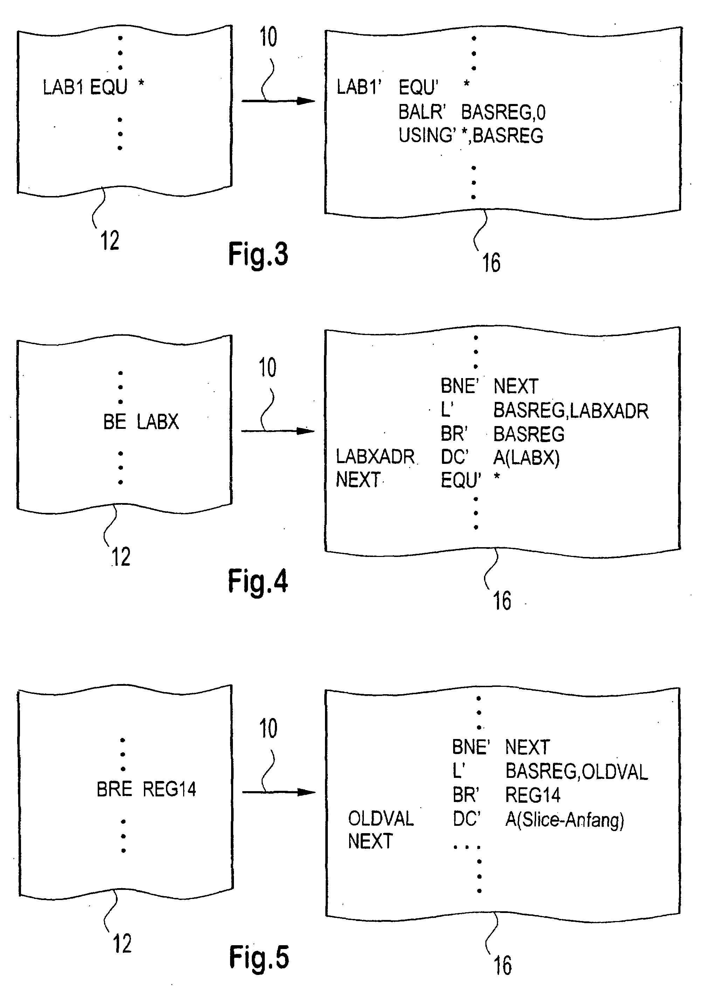

Ergibt die Syntaxanalyse im Schritt 18, daß kein Fehler mehr gemeldet wird, so wird das Quellprogramm 12 in eine Zwischensprache übersetzt, die jedoch für das Verständnis des erfindungsgemäßen Verfahrens nicht erläutert werden muß, vgl. Schritt 22. In einem folgenden Schritt 24 wird geprüft, ob das Objektprogramm 16 für den 390er-Prozessor erzeugt werden soll. Ist dies der Fall, so folgt unmittelbar nach dem Schritt 24 ein Schritt 26, in welchem eine verfälschte Befehlsfolge für den 390er-Prozessor erzeugt wird. Die verfälschte Befehlsfolge unterscheidet sich von einer beim bestimmungsgemäßen Gebrauch des Quellprogramms 12 erzeugten Befehlsfolge dadurch, daß zusätzliche Befehle eingefügt werden. Die zusätzlich eingefügten Befehle werden unten an Hand der Figur 2 für ein erstes Ausführungsbeispiel und an Hand der Figuren 3 bis 7 für ein zweites Ausführungsbeispiel erläutert.

Wird im Schritt 24 dagegen festgestellt, daß das Objektprogramm 14 für den RISC-Prozessor erzeugt werden soll, so wird in einem Schritt 28 die unverfälschte Befehlsfolge des Objektprogramms 14 für den RISC-Prozessor erzeugt. In der unverfälschten Befehlsfolge befinden sich keine zusätzlich eingefügten Befehle, welche die Ausführung des Objektprogramms 14 verlangsamen würden.

Figur 2 zeigt ein Beispiel für das Einfügen zusätzlicher Leerbefehle zum Verfälschen der Befehlsfolge im Objektprogramm 16. Ein in Figur 2 gezeigter Ausschnitt des Quellprogramms 12 enthält die Anweisung "LAB1 EQU *" für das Assembliererprogramm 10. "LAB1" bedeutet, daß es sich um eine erste Sprungmarke LAB1 handelt, welche ein Sprungziel markiert. Die Buchstaben "LAB" sind ein Kürzel für das englische Wort "label". "EQU" steht als Kürzel für das englische Wort "equal" und der symbolisierte Stern kennzeichnet die aktuell betrachtete Stelle im Quellprogramm 12. Somit wird durch die Anweisung "LAB1 EQU *" dem Assembliererprogramm 10 mitgeteilt, daß an der Stelle dieser Anweisung die Sprungmarke LAB1 liegen soll. Als nächstes folgen im Quellprogramm 12 Befehle B1 und B2, die nicht näher erläutert werden, da sie zum Verständnis des erfindungsgemäßen Verfahrens nicht beitragen können. Nach weiteren nicht dargestellten Befehlen folgt eine Anweisung "LAB2 EQU *". Diese Anweisung bewirkt, daß für das Assembliererprogramm 10 eine Sprungmarke LAB2 festgelegt wird. Nach der Sprungmarke LAB2 folgen Prozessorbefehle Bx und By sowie weitere nicht dargestellte Befehle.

In Figur 2 wurde bei der Darstellung eines Ausschnitts des aus dem Quellprogramm 12 entstandenen Objektprogramms 16 mit einer verfälschten Befehlsfolge darauf verzichtet, Nullen und Einsen darzustellen. Statt dessen wurden die dieser Folge entsprechenden Assemblerbefehle dargestellt. Hochgestellte Striche verdeutlichen, daß es sich bei den Assemblerbefehlen nur um eine Darstellung für Prozessorbefehle handelt. Für den eben erläuterten Ausschnitt des Quellprogramms 12 ergibt sich der in Figur 2 gezeigte Ausschnitt des Objektprogramms 16. Die Anweisung "LAB1 EQU *" wurde direkt in eine durch die Anweisung "LAB1' EQU' *" verdeutlichte Sprungmarke LAB1' übersetzt. Nach der Marke LAB1' wurde ein sogenannter Leerbefehl LR1' 0,0 eingefügt, bei dessen Ausführung ein Register 0 mit dem Inhalt des Registers 0 geladen wird, d.h. mit seinem eigenen Inhalt. Nach dem Leerbefehl LR1' 0,0 folgt ein codierter Befehl B1', der den Assemblerbefehl B1 codiert. Anschließend folgt ein codierter Befehl B2' für den Assemblerbefehl B2.

Durch das Einfügen des Leerbefehls LR1' 0,0 verschiebt sich die Lage der Befehle B1' und B2' innerhalb der Befehlsfolge bezüglich der Marke LAB1'. Dies hat zür Folge, daß Regelverstöße gegen Regeln für die Übertragbarkeit erkannt werden können, bei denen der Programmierer des Quellprogramms 12 darauf vertraut, daß die Befehle B1' und B2' unmittelbar nach der Marke LAB1' folgen. Der Regelverstoß wird indirekt erkannt, wenn das Objektprogramm 16 durch den 390er-Prozessor abgearbeitet wird, da es zu Fehlermeldungen und Unterbrechungen der Programmausführung kommt.

Der Anweisung "LAB2 EQU *" entspricht im Objektprogramm 16 die "rückübersetzte" Anweisung "LAB2' EQU' *" zum Festlegen einer Sprungmarke LAB2'. Nach der Sprungmarke LAB2' wurde vom Assembliererprogramm 10 automatisch ein zusätzlicher Leerbefehl LR2' 0,0 eingefügt, mit dem wiederum das Register Null mit seinem eigenen Inhalt geladen wird. Danach folgen codierte Befehle Bx' bzw. By', welche die Befehle Bx bzw. By codieren.

Durch das Einfügen der Leerbefehle LR1' 0,0, LR2' 0,0 in das Objektprogramm 16 entsteht eine verfälschte Befehlsfolge. Die Ausführbarkeit des Quellprogramms 16 ist jedoch durch die eingefügten Leerbefehle LR1' 0,0 und LR2' 0,0 prinzipiell nicht gefährdet, so daß bei einem übertragbar programmierten Assemblerprogramm das Objektprogramm 16 mit der verfälschten Befehlsfolge prinzipiell genauso wie ein Objektprogramm mit unverfälschter Befehlsfolge arbeitet. Treten dennoch Fehler auf, so sind diese mit Sicherheit auf Verstöße gegen Regeln zum Sichern der Übertragbarkeit zurückzuführen.

Durch das Einfügen der Leerbefehle LR1' 0,0 und LR2' 0,0 verlängert sich das Objektprogramm 16 gegenüber einem Objektprogramm mit einer unverfälschten Befehlsfolge, d.h. ohne Einfügungen von Leerbefehlen. Bei einem Rechner der IBM-Serie /390 bzw. bei einem zur IBM-Serie /390 kompatiblen Rechner muß beim Verfälschen jedoch beachtet werden, daß der 390er-Prozessor Sprungziele unter Verwendung eines Basisregisters BASREG ausführt. Der Inhalt des Basisregisters BASREG legt den Beginn eines 4 kB langen Speicherbereichs fest, der durch den Sprungbefehl nicht verlassen werden darf. Die bezüglich dieses Basisregisters BASREG zu treffenden Maßnahmen werden im folgenden an Hand der Figuren 3 bis 7 erläutert.

Figur 3 zeigt das Verfälschen der Anweisung "LAB1 EQU *" zum Festlegen der Marke LAB1 im Quellprogramm 12. Aus dieser Anweisung werden mit Hilfe des Assembliererprogramms 10 im Objektprogramm 16 Befehle für den 390er-Prozessor erzeugt, die in Assemblersprache im rechten Teil der Figur 3 gezeigt sind. Die Festlegung der Marke "LAB1 EQU *" wird als "LAB1' EQU' *" übernommen, d.h. auch im Objektprogramm 16 befindet sich an der angegebenen Stelle eine der Sprungmarke LAB1 entsprechende Sprungmarke LAB1'. Nach der Sprungmarke LAB1' werden zwei Befehle "BALR' BASREG,0" und "USING' *,BASREG" eingefügt. Diese Befehle treten an die Stelle des Leerbefehls LR1 0,0, vgl. Figur 2, und führen ebenfalls zu einer Vergrößerung des Abstands der Speicheradressen von durch Sprungmarken festgelegten Sprungzielen.

Bei der Berechnung von Sprungzielen wird der Wert des Basisregisters BASREG als Bezugspunkt bei der Berechnung von Sprungzielen verwendet. Im Quellprogramm 12 wurde bereits vom Programmierer sichergestellt, daß Sprungziele niemals mehr als 4 kB vom aktuellen Wert des Basisregisters BASREG entfernt sind. Durch das Einfügen zusätzlicher Befehle, wie z.B. des zusätzlichen Befehls "BALR' BASREG,0", können Sprungziele jedoch über den Bereich von 4 kB hinaus verschoben werden. Um Fehlermeldungen bei der Assemblierung des Quellprogramms 16 zu vermeiden, erhält das Basisregister BASREG mit dem Einfügen des zusätzlichen Befehls "BALR' BASREG, 0" den Wert nach der Speicherzelle, in welcher dieser Befehl selbst im Objektprogramm 16 gespeichert ist. Somit können von dieser Speicheradresse aus wieder Sprungbefehle über einen Adreßbereich von 4 kB erfolgen. Es ist sichergestellt, daß auch beim Ausführen des Objektprogramms 16 keine Fehlermeldungen aufgrund einer Überschreitung des 4 kB Bereichs auftreten. Die Anweisung "USING' *,BASREG" verdeutlicht, daß auch das Assembliererprogramm 10 den neuen Wert des Basisregisters berücksichtigt.

Figur 4 zeigt das Erzeugen eines verfälschten Befehlsfolgenabschnitts für einen sogenannten bedingten Sprungbefehl "BE LABX" zu einer Sprungmarke LABX. Der Assemblerbefehl "BE LABX" im Quellprogramm 12 bedeutet, daß abhängig von einem unmittelbar zuvor durchgeführten Vergleich (nicht dargestellt) bei Gleichheit zur Sprungmarke LABX gesprungen werden soll. "BE" steht für die englische Bezeichnung "branch equal". Im rechten Teil der Figur 4 sind in Assemblerschreibweise die aus dem Assemblerbefehl "BE LABX" erzeugten Prozessorbefehle mit Verfälschung für den 390er-Prozessor dargestellt. Ein Prozessorbefehl "BNE' NEXT" führt zu einem Sprung zu einer Sprungmarke NEXT, falls bei dem vorhergehenden Vergleich eine Ungleichheit festgestellt worden ist. Die Sprungmarke NEXT befindet sich am Ende des in Figur 4 dargestellten Abschnitts der verfälschten Befehlsfolge im Objektprogramm 16, angedeutet durch die Anweisung "NEXT EQU' *". Somit werden bei einer im Vergleich festgestellten Ungleichheit die zwischen dem Befehl "BNE' NEXT" und der Anweisung "NEXT EQU' *" liegenden Befehle nicht ausgeführt. Mit anderen Worten, sie werden übersprungen. Der folgende Prozessorbefehl "L' BASREG, LABXADR" lädt das Basisregister BASREG mit dem Wert einer Konstanten LABXADR, die wie im folgenden noch erläutert, genau der Adreßwert der Marke LABX hat. Anschließend wird mit einem Befehl "BR' BASREG" zur Marke LABX verzweigt. Ein weiterer eingefügter Befehl. "LABXADR DC' A(LABX)" definiert die Konstante LABXADR und weist ihr den Wert der Adresse A der Marke LABX zu.

Das Verfälschen des Befehls "BE LABX" im Quellprogramm 12 gewährleistet, daß das Sprungziel LABX auch erreicht wird, wenn es aufgrund des Verfälschens selbst weiter als 4 kB von der aktuell im Basisregister BASREG angegebenen Speicherzelle entfernt ist. Somit wird der Befehl "BE LABX" zweckmäßigerweise nur dann "verfälscht", wenn das Sprungziel nicht mit Hilfe des aktuell im Basisregister BASREG gespeicherten Werts erreicht werden kann. Diese Überprüfung führt das Assembliererprogramm 10 automatisch durch.

Figur 5 zeigt das Verfälschen eines bedingten Assemblersprungbefehls "BRE REG14", bei dem ein Register REG14 verwendet wird, in welchem das Sprungziel angegeben ist. "BRE" steht für die englische Bezeichnung "branch register equal" die einem nicht dargestellten Vergleich folgt und besagt, daß der Sprungbefehl unter Verwendung eines Registers ausgeführt werden soll, wenn beim Vergleich Gleichheit festgestellt worden ist. Im Ausführungsbeispiel ist die Zieladresse des Sprungbefehls im Register REG14 gespeichert.

Im Objektprogramm 16 entstehen aus dem Assemblerbefehl "BRE REG14" fünf Prozessorbefehle für den 390er-Prozessor, die in Figur 5 jedoch in Assemblersprache dargestellt sind. Ein Befehl "BNE' NEXT" bewirkt einen Sprung zur Sprungmarke NEXT falls beim Vergleich Ungleichheit festgestellt worden ist. Die Marke NEXT befindet sich am Ende der in Figur 5 gezeigten Befehlsfolge im Objektprogramm 16. Die zwischen dem Sprungbefehl "BNE' NEXT" und der Marke NEXT liegenden Befehle werden somit nur dann ausgeführt, wenn beim Vergleich Gleichheit festgestellt worden ist.

In diesem Fall wird ein Prozessorbefehl "L' BASREG, OLDVAL" ausgeführt, mit dem das Basisregister BASREG den Wert einer mit OLDVAL bezeichneten Konstanten erhält. Anschließend wird mit einem Befehl "BR' REG14" zu einer Speicherzelle verzweigt, deren Adresse im Register REG14 enthalten ist. Der Wert der Konstanten OLDVAL wird entsprechend der Anweisung "OLDVAL DC' A (SLICE-ANFANG)" vom Assembliererprogramm 10 festgelegt und in der Befehlsfolge des Objektprogramms 16 nach dem Prozessorbefehl "BR' REG14" gespeichert. Die Konstante OLDVAL hat den Adreßwert, der im Basisregister BASREG ohne ein Verfälschen der Befehlsfolge enthalten sein müßte. Durch diese Maßnahme wird gewährleistet, daß nach dem Ausführen des Sprungbefehls "BR' REG14" der vom Programmierer des Quellprogramms 12 erwartete Adreßwert im Basisregister BASREG enthalten ist. Bei einer weiteren Verarbeitung, die auf diesen Adreßwert im Basisregister BASREG aufbaut, entstehen somit keine Fehlermeldungen.

Treten im Quellprogramm 12 Befehle bzw. Anweisungen auf, mit denen das Basisregister BASREG einen bestimmten Adreßwert erhält, so hat dies im Objektprogramm 16 keine Generierung von Befehlen zur Folge. Ein Befehl "L BASREG, VCONST" im Quellprogramm 12 soll z.B. das Basisregister mit dem Wert einer Konstante VCONST laden. Ein äquivalenter Befehl im Objektprogramm 16 wäre deshalb überflüssig, weil das Basisregister BASREG ohnehin als Arbeitsregister verwendet und somit ohnehin laufend überschrieben wird. Eine Anweisung an das Assembliererprogramm 10 "USING BASREG, SLICE-ANFANG" mit der dem Assembliererprogramm mitgeteilt soll, daß das Basisregister BASREG nunmehr einen bestimmten konstanten Wert hat, nämlich den Adreßwert eines aktuellen 4 kB Bereichs, hat ebenfalls keine Generierung eines Befehls im Objektprogramm 16 zur Folge.

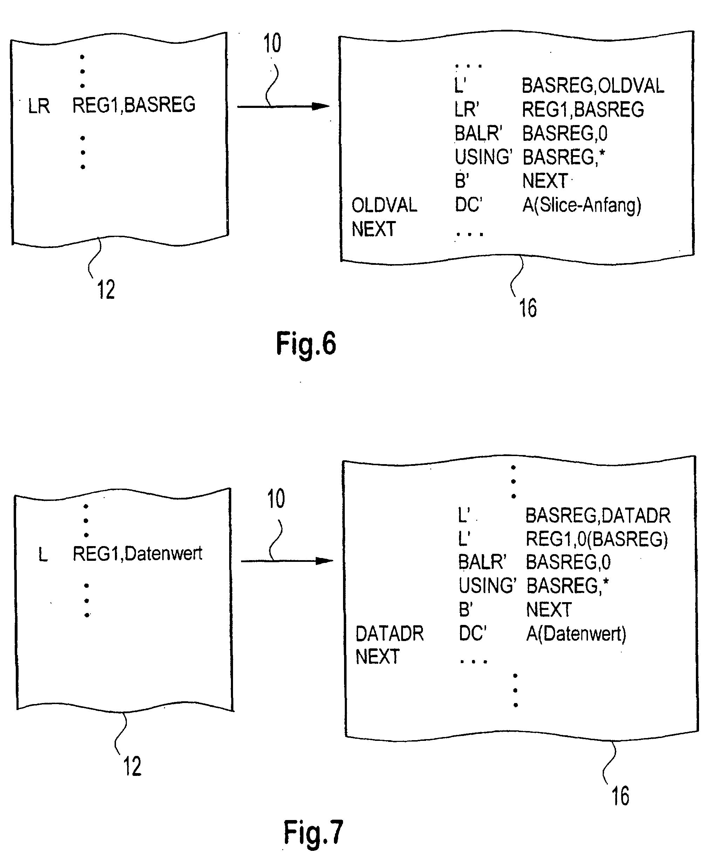

Figur 6 zeigt die aus einem Ladebefehl "LR REG1, BASREG" erzeugten Maschinenbefehle bzw. Prozessorbefehle im Objektprogramm 16, wobei wiederum zur Darstellung der Prozessorbefehle die Assemblerschreibweise verwendet worden ist. Der Befehl "LR REG1, BASREG" im Quellprogramm 12 soll bewirken, daß in das Register REG1 im 390er-Prozessor der Inhalt des Basisregisters BASREG übernommen wird. Offensichtlich verläßt sich der Programmierer des Quellprogramms 12 abermals darauf, daß im Basisregister BASREG ein bestimmter Wert enthalten ist, der im folgenden weiterverarbeitet werden soll. Im Quellprogramm 16 muß deshalb mit Hilfe eines Prozessorbefehls "L' BASREG, OLDVAL" ein ursprünglicher Wert OLDVAL in das Basisregister BASREG geschrieben bzw. geladen werden. Erst danach folgt der zum Assemblerbefehl "LR REG1, BASREG" äquivalente Prozessorbefehl "LR' REG1, BASREG". Um ein Überschreiten des 4 kB Bereichs zu verhindern, wird im folgenden Prozessorbefehl "BALR' BASREG,0" das Basisregister BASREG wie bereits an Hand der Figur 3 erläutert, mit dem Wert der nachfolgenden Speicheradresse geladen, in welcher dieser Befehl selbst gespeichert ist. Die Anweisung "USING' BASREG,*" verdeutlicht wiederum, daß dem Assembliererprogramm 10 der neue Wert des Basisregisters BASREG mitgeteilt wird.

Ein folgender Prozessorbefehl "B' NEXT" bewirkt einen unbedingten Sprung zur Sprungmarke NEXT, die im Ausführungsbeispiel der Figur 6 unmittelbar nach einer folgenden Anweisung "OLDVAL' DC A(SLICE-ANFANG)" liegt. Somit werden vom Assembliererprogramm 10 in Ausführung der Anweisung "OLDVAL' DC A(SLICE-ANFANG) zwischen dem Sprungbefehl "B' NEXT" und der Sprungmarke NEXT gespeicherte Daten für die Konstante OLDVAL beim Abarbeiten des in Fig. 6 gezeigten Abschnitts des Objektprogramms 16 übersprungen. Der alte Wert OLDVAL des Basisregisters BASREG ist die Adresse A des sogenannten Slice-Anfangs, also des Anfangs des 4 kB Bereichs, den der Programmierer des Quellprogramms 12 beim Befehl "LR REG1, BASREG" aktuell verwendet hat.

Figur 7 zeigt das "Verfälschen" eines Ladebefehls "L REG1, Datenwert" im Quellprogramm 12. Durch diesen Befehl wird das Register REG1 mit einem vorgegebenen Datenwert belegt. Der Datenwert ist dabei im Quellprogramm 12 selbst enthalten und wird auch in die Befehlsfolge des Objektprogramms 16 übernommen. Beim Zugriff auf den Datenwert wird ebenfalls das Basisregister BASREG verwendet, wobei der Datenwert nicht mehr als 4 kB vom Adreßwert im Basisregister BASREG entfernt sein darf. Deshalb müssen folgende Schritte durchgeführt werden:
- in das Basisregister BASREG wird der Adreßwert A der den Datenwert enthaltenden Speicherzelle geschrieben,
- der Zugriff auf den Datenwert wird ausgeführt, und
- das Basisregister BASREG erhält wieder einen neuen Wert.

Ein Prozessorbefehl "L' BASREG, DATADR" lädt den Inhalt einer Konstante DATADR in das Basisregister BASREG. Die Konstante DATADR wird wie weiter unten erläutert im Objektprogramm 16 generiert und gibt die Adresse der Speicherzelle an, in welcher der Datenwert gespeichert ist. Ein Befehl "L' REG1,0(BASREG)" lädt in das Register REG1 des 390er-Prozessors den Inhalt der Speicheradresse, die im Basisregister BASREG angegeben ist, also den Datenwert. Anschließend wird das Basisregister BASREG beim Ausführen des Prozessorbefehls "BALR" BASREG, 0" bzw. der Anweisung "USING' BASREG,*" mit dem Adreßwert der Speicherzelle beschrieben, welche der Speicherzelle folgt, in welcher der Befehl "BALR' BASREG, 0" im Objektprogramm 16 gespeichert ist.

Ein Prozessorbefehl "B' NEXT" bewirkt, daß die Daten der Konstante DATADR zwar im Objektprogramm 16 enthalten sind, jedoch nicht als Befehle abgearbeitet werden, weil diese Daten beim Abarbeiten der Befehle übersprungen werden. Ein Befehl "DATADR DC' A(Datenwert)" definiert die Konstante DATADR und weist ihr die Adresse A der den Datenwert enthaltenden Speicherzelle zu. Der Datenwert kann z.B. am Ende des Quellprogramms 16 gespeichert sein.

Bei anderen Assemblerbefehlen im Quellprogramm 12, d.h. Befehlen, die nicht an Hand der Figuren 3 bis 7 erläutert wurden, werden im Objektprogramm 16 die vom Hersteller des 390er-Prozessors vorgegebenen Prozessorbefehle im Objektprogramm 16 verwendet. Ein Verfälschen des Quellprogramms 12 findet somit für diese Befehle nicht statt.

## Patentansprüche

1. Verfahren zum Testen eines Assembler-Programms (12) auf Übertragbarkeit von einem ersten Prozessortyp auf einen zweiten Prozessortyp,
bei dem ein Assembler-Programm (12) für einen ersten Prozessortyp Assembler-Befehle enthält,
für das Assembler-Programm (12) Regeln vorgegeben werden, die ein Übertragen des Assembler-Programms (12) in eine Folge (14) von Prozessorbefehlen für einen vom ersten Prozessortyp verschiedenen zweiten Prozessortyp ermöglichen,
überprüft wird, ob das Assembler-Programm (12) diesen Regeln entspricht,
zum Überprüfen des Assembler-Programms (12) auf Übertragbarkeit zumindest ein Teil seiner Assembler-Befehle in eine verfälschte Befehlsfolge (16) für den ersten Prozessortyp übersetzt werden,
die verfälschte Befehlsfolge (16) im Vergleich zu einer beim bestimmungsgemäßen Gebrauch des Assembler-Programms (12) verwendeten unverfälschten Befehlsfolge für den ersten Prozessortyp an mindestens einer vorgegebenen Stelle mindestens einen zusätzlichen Prozessorbefehl (LR1' 0,0) enthält,
die verfälschte Befehlsfolge (16) mit einem Prozessor des ersten Prozessortyps ausgeführt und getestet wird,
und bei dem das Assembler-Programm (12) übertragen wird, wenn beim Test kein Fehler gemeldet wird.

2. Verfahren nach Anspruch 1, **dadurch gekennzeichnet, daß** der zusätzliche Prozessorbefehl (LR1' 0,0) ein keine Operation bewirkender Leerbefehl für den ersten Prozessortyp oder ein Prozessorbefehl mit gleichartiger Wirkung ist.

3. Verfahren nach Anspruch 1 oder 2, **dadurch gekennzeichnet, daß** die vorgegebene Stelle eine Speicheradresse ist, die eine in einem Sprungbefehl der übersetzten Befehlsfolge angegebene ein Sprungziel festlegende Zieladresse (LAB1') ist.

4. Verfahren nach einem der vorhergehenden Ansprüche, **dadurch gekennzeichnet, daß** der Prozessor Sprungbefehle nur beschränkt, innerhalb mindestens eines vorgegebenen Speicheradreßbereichs ausführen kann, dessen Anfang in einem prozessoreigenen Basisregister (BASREG) festgelegt wird.

5. Verfahren nach Anspruch 4, **dadurch gekennzeichnet, daß** der eingefügte Prozessorbefehl ein Befehl zum Schreiben eines vorgegebenen Adreßwertes in das Basisregister (BASREG) ist.

6. Verfahren nach Anspruch 5, **dadurch gekennzeichnet, daß** der vorgegebene Adreßwert ein ursprünglicher Wert (OLDVAL) des Basisregisters (BASREG) ist, den das Basisregister (BASREG) ohne Einfügen von zusätzlichen Befehlen hätte.

7. Verfahren nach Anspruch 5, **dadurch gekennzeichnet**, -daß der vorgegebene Adreßwert ein Adreßwert der Speicherzelle ist, welche der Speicherzelle folgt, in welcher der Befehl zum Laden des Basisregisters selbst gespeichert ist.

8. Verfahren nach Anspruch 5, **dadurch gekennzeichnet, daß** der vorgegebene Adreßwert ein Adreßwert (A(Datenwert)) ist, an dem ein zu verarbeitendes Datum innerhalb der verfälschten Befehlsfolge (16) gespeichert ist.

9. Verfahren nach Anspruch 5, **dadurch gekennzeichnet, daß** der vorgegebene Adreßwert ein Adreßwert (A(LABX)) eines Sprungziels (LABX) ist, das im Assembler-Programm (12) vorgegeben ist.

10. Verfahren nach einem der vorhergehenden Ansprüche, **dadurch gekennzeichnet, daß** es in einem Assemblierer-Programm (10) verwendet wird, das wahlweise eine verfälschte Befehlsfolge (16) für den ersten Prozessortyp oder eine unverfälschte Befehlsfolge (14) für den zweiten Prozessortyp erzeugt.

11. Datenverarbeitungsanlage, insbesondere zum Durchführen des Verfahrens nach einem der vorhergehenden Ansprüche,
mit einem Prozessor eines ersten Prozessortyps zum Ausführen von Prozessorbefehlen,
einem Speicher zum Speichern eines Assembler-Programms (12) aus Assembler-Befehlen, zum Speichern der Befehlsfolge eines Assemblierer-Programms (10), welches das Assembler-Programm (12) in eine Befehlsfolge (16) aus Prozessorbefehlen für den ersten Prozessortyp übersetzt und zum Speichern der beim Übersetzen erzeugten Befehlsfolge (16) selbst,
wobei der Prozessor beim Ausführen des Assemblierer-Programms (10) anstelle einer beim bestimmungsmäßigen Gebrauch des Assembler-Programms (12) zu erzeugenden unverfälschten Befehlsfolge für den ersten Prozessortyp eine verfälschte Befehlsfolge (16) für den ersten Prozessortyp erzeugt, die im Vergleich zur unverfälschten Befehlsfolge an mindestens einer vorgegebenen Stelle mindestens einen zusätzlichen Prozessorbefehl (LR' 0,0) enthält.

12. Verfahren zum Übersetzen eines Assembler-Programms (12),
bei dem ein Assembler-Programm (12) für einen ersten Prozessortyp Assembler-Befehle enthält,
und bei dem die Assembler-Befehle in eine Befehlsfolge (16) für einen ersten Prozessortyp übersetzt werden,
wobei beim Übersetzen anstelle einer beim bestimmungsmäßigen Gebrauch des Assembler-Programms (12) zu erzeugenden unverfälschten Befehlsfolge für den ersten Prozessortyp eine verfälschte Befehlsfolge (16) für den ersten Prozessortyp erzeugt wird, die im Vergleich zur unverfälschten Befehlsfolge an mindestens einer vorgegebenen Stelle mindestens einen zusätzlichen Prozessorbefehl (LR' 0,0) enthält.

13. Verfahren nach Anspruch 12, **dadurch gekennzeichnet, daß** es in einem Assemblierer-Programm (10) verwendet wird, das wahlweise eine verfälschte oder unverfälschte Befehlsfolge für den ersten Prozessortyp erzeugt.

## Claims

1. Method for testing an assembler program (12) for transferability from a first processor type to a second processor type,
in which an assembler program (12) contains assembler instructions for a -first processor type, rules are predetermined for the assembly program (12), which allow the assembler program (12) to be transferred to a sequence (14) of processor instructions for a second processor type, which is not the same as the first processor type,
a check is carried out to determine whether the assembler program (12) satisfies these rules,
in order to check the assembler program (12) for transferability, at least some of its assembler instructions are translated to a corrupted instruction sequence (16) for the first processor type,
the corrupted instruction sequence (16) contains at least one additional processor instruction (LR1' 0,0) at at least one predetermined point in comparison to an uncorrupted instruction sequence, which is used during correct use of the assembler program (12), for the first processor type,
the corrupted instruction sequence (16) is carried out and is tested using a processor of the first processor type,
and in which the assembler program (12) is transferred if no fault is reported during the test.

2. Method according to Claim 1, **characterized in that** the additional processor instruction (LR1' 0,0) is a blank instruction, which does not produce any operation, for the first processor type, or is a processor instruction with an identical effect.

3. Method according to Claim 1 or 2, **characterized in that** the intended point is a memory address, which is a destination address (LAB1') which is indicated in a jump instruction of the translated instruction sequence and defines a jump destination.

4. Method according to one of the preceding claims, **characterized in that** the processor can carry out jump instructions only in a restricted manner within at least one predetermined memory address area, whose start is defined in a processor-specific basic register (BASREG).

5. Method according to Claim 4, **characterized in that** the inserted processor instruction is an instruction to write a predetermined address value to the basic register (BASREG).

6. Method according to Claim 5, **characterized in that** the predetermined address value is an original value (OLDVAL) of the basic register (BASREG) which the basic register (BASREG) would have had without the insertion of additional instructions.

7. Method according to Claim 5, **characterized in that** the predetermined address value is an address value of the memory cell which follows that memory cell in which the instruction for loading the basic register is itself stored.

8. Method according to Claim 5, **characterized in that** the predetermined address value is an address value (A(data value)) at which a data item to be processed is stored within the corrupted instruction sequence (16).

9. Method according to Claim 5, **characterized in that** the predetermined address value is an address value (A(LABX)) of a jump destination (LABX) which is predetermined in the assembler program (12).

10. Method according to one of the preceding claims, **characterized in that** said method is used in an assembler program (10) which optionally produces a corrupted instruction sequence (16) for the first processor type or an uncorrupted instruction sequence (14) for the second processor type.

11. Data processing system, in particular for carrying out the method according to one of the preceding claims,
having a processor of a first processor type for carrying out processor instructions,
having a memory for storing an assembler program (12) comprising assembler instructions, for storing the instruction sequence of an assembler program (10) which translates the assembler program (12) to an instruction sequence (16) from processor instructions for the first processor type, and for storage of the instruction sequence (16) itself produced during translation,
with the processor producing a corrupted instruction sequence (16) for the first processor type when carrying out the assembler program (10), instead of an uncorrupted instruction sequence, which is to be produced during correct use of the assembler program (12), for the first processor type, which corrupted instruction sequence (16) contains at least one additional processor instruction (LR' 0,0) at at least one predetermined point in comparison to the uncorrupted instruction sequence.

12. Method for translation of an assembler program (12),
in which an assembler program (12) contains assembler instructions for a first processor type, and in which the assembler instructions are translated to an instruction sequence (16) for a first processor type,
with a corrupted instruction sequence (16) being produced for the first processor type during translation instead of an uncorrupted instruction sequence, which is to be produced for correct use of the assembler program (12), for the first processor type, which corrupted instruction sequence (16) contains at least one additional processor instruction (LR' 0,0) at at least one predetermined point in comparison to the uncorrupted instruction sequence.

13. Method according to Claim 12, **characterized in that** said method is used in an assembler program (10) which optionally produces a corrupted or uncorrupted instruction sequence for the first processor type.

## Revendications

1. Procédé pour tester la transférabilité d'un programme (12) assembleur d'un premier type de processeur à un deuxième type de processeur,
dans lequel un programme (12) assembleur pour un premier type de processeur contient des instructions d'assembleur,
il est prescrit pour le programme (12) assembleur des règles qui permettent un transfert du programme (12) assembleur en une séquence (14) d'instructions de processeur pour un deuxième type de processeur différent du premier type de processeur,
il est vérifié si le programme (12) assembleur correspond à ces règles,
pour vérifier la transférabilité du programme (12) assembleur, au moins une partie de ces instructions d'assembleur est traduite en une séquence (16) d'instructions falsifiée pour le premier type de processeur,
la séquence (16) d'instructions falsifiée contient, comparée à une séquence d'instructions non falsifiée pour le premier type de processeur, utilisée lors de l'usage du programme (12) assembleur conformément à ce pourquoi il est prévu, au moins une instruction (LR1' 0,0) de processeur supplémentaire en au moins un emplacement prescrit,
la séquence (16) d'instructions falsifiée est réalisée et testée par un processeur du premier type de processeur,
et dans lequel le programme (12) assembleur est transféré s'il n'est pas signalé d'erreur lors du test.

2. Procédé suivant la revendication 1, **caractérisé en ce que** l'instruction (LR1' 0,0) de processeur supplémentaire est une instruction vide ne provoquant pas d'opération pour le premier type de processeur ou une instruction de processeur à effet du même genre.

3. Procédé suivant la revendication 1 ou 2, **caractérisé en ce que** l'emplacement prescrit est une adresse de mémoire qui est une adresse (LAB1') de destination indiquée dans une instruction de saut de la séquence d'instruction traduite et fixant une destination de saut.

4. Procédé suivant l'une des revendications précédentes, **caractérisé en ce que** le processeur ne peut réaliser des instructions de saut que de façon limitée, à l'intérieur d'au moins une zone d'adresse de mémoire prescrite dont le début est fixé dans un registre (BASREG) de base propre au processeur.

5. Procédé suivant la revendication 4, **caractérisé en ce que** l'instruction de processeur inséré est une instruction pour écrire une valeur d'adresse prescrite dans le registre (BASREG) de base.

6. Procédé suivant la revendication 5, **caractérisé en ce que** la valeur d'adresse prescrite est une valeur (OLDVAL) initiale du registre (BASREG) de base que le registre (BASREG) de base aurait sans insertion d'instructions supplémentaires.

7. Procédé suivant la revendication 5, **caractérisé en ce que** la valeur d'adresse prescrite est une valeur d'adresse de la cellule de mémoire qui suit la cellule de mémoire dans laquelle l'instruction pour le chargement du registre de base lui-même est mis en mémoire.

8. Procédé suivant la revendication 5, **caractérisé en ce que** la valeur d'adresse prescrite est une valeur (A(Datenwert)) d'adresse à laquelle une donnée à traiter à l'intérieur de la séquence (16) d'instructions falsifiée est mémorisée.

9. Procédé suivant la revendication 5, **caractérisé en ce que** la valeur d'adresse prescrite est une valeur (A(LABX)) d'adresse d'une destination (LABX) de saut qui est prescrite dans le programme (12) assembleur.

10. Procédé suivant l'une des revendications précédentes, **caractérisé en ce qu'**il est utilisé dans un programme (10) d'assemblage qui produit au choix une séquence (16) d'instructions falsifiée pour le premier type de processeur ou une séquence (14) d'instructions non falsifiée pour le deuxième type de processeur.

11. Installation de traitement de données, notamment pour la mise en oeuvre du procédé suivant l'une des revendications précédentes,
comportant un processeur d'un premier type pour l'éxécution d'instructions de processeur,
une mémoire pour la mise en mémoire d'un programme (12) d'assembleur constitué d'instructions d'assembleur, pour la mise en mémoire de la séquence d'instructions d'un programme (10) d'assemblage, qui traduit le programme (12) assembleur en une séquence (16) d'instructions constituée d'instructions de processeur pour le premier type de processeur et pour la mise en mémoire de la séquence (16) d'instructions produite lors de la traduction,
dans laquelle le processeur produit, lors de l'exécution du programme (10) d'assemblage, au lieu d'une séquence d'instructions pour le premier type de processeur non falsifiée, à produire lors de l'usage du programme (12) assembleur conformément à ce pourquoi il est prévu, une séquence (16) d'instructions falsifiée pour le premier type de processeur qui contient, comparée à la séquence d'instructions non falsifiée, au moins une instruction (LR' 0,0) de processeur supplémentaire en au moins un emplacement prescrit.

12. Procédé pour traduire un programme (12) assembleur,
dans lequel un programme (12) assembleur contient des instructions d'assembleur pour un premier type de processeur,
et dans lequel les instructions d'assembleur sont traduites en une séquence (16) d'instructions pour un premier type de processeur,
une séquence d'instructions falsifiée étant produite lors de la traduction au lieu d'une séquence (16) d'instructions pour le premier type de processeur non falsifiée à produire lors de l'usage du programme (12) d'assembleur conformément à ce pourquoi il est prévu, la séquence (16) d'instructions falsifiée contenant, comparée à la séquence d'instructions non falisifée, au moins un instruction (LR' 0,0) de processeur supplémentaire en au moins un emplacement prescrit.

13. Procédé suivant la revendication 12, **caractérisé en ce qu'**il est utilisé dans un programme (10) d'assemblage qui produit au choix une séquence d'instructions falsifiée ou non falsifiée pour le premier type de processeur.
